# EUROPEAN PATENT APPLICATION

(11) **EP 4 523 999 A1**
(43) Date of publication of application: **19.03.2025**
(21) Application number: 23197082.3
(22) Date of filing: 13.09.2023
(51) Int. Cl.: B62D 25/00, B62D 29/00

(54) **REINFORCING MEMBER WITH END CAP**

(71) Applicant: Sika Technology AG, 6340 Baar (CH)
(72) Inventor: HAEGEL, Yannick, 59650 Villeneuve d Ascq (FR); TATRAI, Istvan, 59152 Chereng (FR); LINDGREN, Henrik, 7181 Feluy (BE)
(74) Representative: Sika Patent Attorneys

(57) **Abstract**

A reinforcing member (100) for reinforcing a vehicle body (VC), the reinforcing member comprising:
an elongate hollow body (110) having at least one cavity (110a, 110b), especially a plurality of cavities, running along a longitudinal axis (L) of the hollow body (110);
an end cap (120) arranged at a first end (111) of the hollow body (110) to close the at least one cavity (110a, 110b) in a sealing manner and to reinforce the elongate hollow body (110) at the first end (111);
whereby the end cap (120) comprises a carrier (121) with a first area (121a), which is facing the first end (111) of the elongate hollow body (110) and whereby the first area (121a) comprises a first expandable material (123a), which, at least in expanded state, joins the end cap (120) with the hollow body (110), especially in a sealing manner; and
the end cap (120) comprises a second expandable material (123b) located at a second area (121b) of the end cap (120), whereby the second expandable material (123b), at least in expanded state, is configured to join the end cap (120) with a part of the vehicle body (VC).

## Description

### Technical field

The invention relates to a reinforcing member for reinforcing a vehicle body and to a vehicle body comprising the reinforcing member. Furthermore, the invention is related to the use of the reinforcing member to reinforce a vehicle body.

### Background art

Construction elements such as, for example, bodies and/or chassis of transportation and conveyance means, in particular of aquatic or terrestrial vehicles or of aircraft, in many instances have structures having cavities in order for lightweight constructions to be enabled. These cavities however cause the most varied of problems. Depending on the type of the cavity, the latter has to be sealed in order to prevent the ingress of moisture and contaminations which can lead to corrosion of the construction elements. It is often also desirable for the cavities and thus the construction element to be substantially reinforced but for the low weight to be maintained. It is often also necessary for the cavities and thus the construction elements to be stabilized in order for noises, which would otherwise be transmitted along the cavity or through the latter, to be reduced.

Sealing elements (baffles) are therefore used in particular in the automotive industry but also in the aviation and nautical industry in order for cavities to be sealed and/or to be acoustically closed off or reinforcing elements (reinforcers) are used in order for cavities to be reinforced.

In particular, at the end of elongate hollow bodies, e.g., in the form of extruded Aluminum structural members, baffles are used to seal the hollow bodies. Sometimes the baffles are further protected with an additional end cap, e.g., made of Aluminum.

In this regard, US 2013/0243980 A1 (Zephyros, Inc.) describes for example a reinforcement system for a structural member. The reinforcement system includes a carrier member with a plurality of cavities extending along the longitudinal axis wherein the carrier member forms a cross-sectional shape roughly corresponding to the cross-sectional shape of interior walls of a hollow structural member. The system also includes an activatable material placed over the carrier. The activatable material is configured to expand upon application of heat and adhere to the interior walls of the hollow structural member to provide reinforcement of the same. The system further includes one or more caps located at the first, second or both ends of the carrier. The one or more caps configured for engaging the end portion of the carrier and may include one or more attachment features for attaching the carrier member to the interior walls of the hollow structural member.

However, when adding Aluminum profiles to vehicle bodies, connections with surrounding steel or other materials have to be limited due to thermal elongation problems and to allow clearance during assembly.

Furthermore, placing and fixing sealing or reinforcing elements inside cavities, as this is proposed in US 2013/0243980 A1, usually requires a lot of machining to allow sealing or reinforcing elements to be inserted correctly. Also, the elements usually seal each individual cavity, which can lead to issues in case liquid finds its way into the structural member. With vehicles, this might create slosh noise during driving and the cavities have to be drained separately.

Thus, there is still a need for new and improved solutions that overcome the aforementioned disadvantages as far as possible.

### Disclosure of the invention

It is an object of the present invention to provide an improved solution for reinforcing vehicle bodies. Especially, the solutions should improve the reinforcement of vehicle bodies with reinforcing members based on elongate hollow bodies, in particular with extruded Aluminum structural members. Furthermore, the solution should allow to combine sealing and reinforcing functions in one part, and, preferably, alleviate drainage problems.

Surprisingly, it has been found that this object can be achieved by the features of claim 1. Thus, the core of the present invention is related to a reinforcing member for reinforcing a vehicle body, the reinforcing member comprising:
an elongate hollow body having at least one cavity, especially a plurality of cavities, running along a longitudinal axis of the hollow body;
an end cap arranged at a first end of the hollow body to close the at least one cavity in a sealing manner and to reinforce the elongate hollow body at the first end;
whereby the end cap comprises a carrier with a first area, which is facing the first end of the elongate hollow body and whereby the first area comprises a first expandable material, which, at least in expanded state, joins the end cap with the hollow body, especially in a sealing manner; and
the end cap comprises a second expandable material located at a second area of the end cap, whereby the second expandable material, at least in expanded state, is configured to join the end cap with a part of the vehicle body.

As it turned out, the end cap according to the invention can be fixed at the first end of the hollow body with the first expandable material and simultaneously be fixed with the part of the vehicle body with the other expandable material. This allows to seal and reinforce the hollow body with only one part at the same time in a rather simple manner. Put differently, the end cap according to the invention allows combining sealing, reinforcing and fixation functions in one single element. Additionally, since the end cap can be attached to the vehicle body by an expandable material, thermal elongation problems are much less of an issue.

Especially, solutions become possible in which no sealing or reinforcing elements need to be placed inside the elongate hollow body and force-fit and/or form-fit connections between the end cap and the vehicle body can be dispensed with.

Also, drainage can be substantially simplified. This is in particular because due to the use of an end cap, there is no need to seal each cavity of the hollow body individually so that connections between the cavities can remain in place although the hollow body as a whole is sealed.

Additional aspects of the invention are subject of further independent claims. Particularly preferred embodiments are outlined throughout the description and the dependent claims.

### Ways of carrying out the invention

A first aspect of the present invention is directed to a reinforcing member for reinforcing a vehicle body, the reinforcing member comprising:
an elongate hollow body having at least one cavity, especially a plurality of cavities, running along a longitudinal axis of the hollow body;
an end cap arranged at a first end of the hollow body to close the at least one cavity in a sealing manner and to reinforce the elongate hollow body at the first end;
whereby the end cap comprises a carrier with a first area, which is facing the first end of the elongate hollow body and whereby the first area comprises a first expandable material, which, at least in expanded state, joins the end cap with the hollow body, especially in a sealing manner; and
the end cap comprises a second expandable material located at a second area of the end cap, whereby the second expandable material, at least in expanded state, is configured to join the end cap with a part of the vehicle body.

Especially, the end cap is configured as a combined sound baffle and reinforcer. In particular, the end cap is configured for providing structural reinforcement to the hollow body and simultaneously inhibiting the transfer of sound, noise, and/or vibration along the elongate hollow body.

According to a preferred embodiment, the end cap is configured to engage and/or embrace the first end of the hollow body. In this case, a mechanical connection between the hollow body and the end cap can be improved. Also, this allows the relative position between cap and body to be defined in a specific manner.

However, in other embodiments, the end cap can for example be configured to be attached to a face side at the first end of the hollow body exclusively with the first expandable material without engaging and/or embracing the hollow body.

Further preferred, the end cap is configured to engage with the first end of the hollow body in a form-fit manner. The form-fit in particular is given with respect to a direction perpendicular to the longitudinal axis of the hollow body. Such a configuration is highly beneficial to anchor and stabilize the end cap at the hollow body.

Thereby, preferably, the end cap is configured for engaging with an outer surface of the first end of the elongate body. With such a configuration, there is no need for the end cap to protrude inside the at least one cavity or to fix the end cap inside the cavity. This makes it possible to simplify drainage of the hollow body, especially in case of two or more cavities.

Alternatively, or in addition, the end cap can be configured to be attachable to the hollow body in a force-fit manner.

Preferably, the carrier comprises an essentially flat first area that is arranged essentially perpendicular to a longitudinal axis of the hollow body.

Especially, the end cap comprises at least one flange projecting from the carrier, whereby the flange is configured to surround the outer surface of the hollow body in the region of the first end at least partly, especially completely, in a form-fit manner.

Especially, the flange extends over at least 50%, in particular at least 80%, for example 100%, of a circumference of the hollow body in the region of the first end. This results in a highly stable mechanical connection between the end cap and hollow body. At the same time, a highly tight sealing is obtainable.

In this case, the carrier preferably comprises an essentially flat first area and is arranged essentially perpendicular to a longitudinal axis of the hollow body, as described above.

Preferably, the first expandable material is arranged such that in expanded stated it seals an outer contour of the at least one cavity at the first end. The contour means an area on the face side of the first end surrounding all of the cavities of the hollow body at the first end.

Especially an outer contour of all cavities at the first end is sealed by the first expandable material, whereas, preferably, regions of the face end of the first end located between neighboring cavities are free of expandable material.

In particular, the first expandable material as a whole is arranged on the carrier along a single loop and/or in the form of a single loop. This greatly simplifies installation and allows realizing fluid-permeable passages between neighboring cavities. Especially a loop is meant to be a closed curve. Especially without any branches. Thereby, preferably, the loop has the shape of the outer contour of all of the cavities at the first end.

Further preferred, the first expandable material is arranged such that in expanded state, at the first end, neighboring cavities are in fluid communication with each other. This simplifies installation of the end cap and drainage of the hollow body, especially in case of two or more cavities.

In particular, the second area of the end cap comprising the second expandable material is located on an outer side of the carrier facing away from the hollow body, especially facing away in a direction of the longitudinal axis of the hollow body and/or in a direction perpendicular to the longitudinal axis.

Especially, if the end cap comprises at least one flange projecting from the carrier, at least a part of the second expandable material is located on an outer surface of the flange, especially an out surface facing away from the hollow body in a direction perpendicular to the longitudinal axis of the hollow body.

Optionally, a further part of the second expandable material may then be arranged on an outer side of the carrier facing away from the hollow body in a direction of the longitudinal axis of the hollow body.

In a highly preferred embodiment, the carrier of the end cap, especially the whole end cap, does not engage with an inner surface of the at least one cavity.

In particular, the carrier of the end cap, especially the whole end cap, does not protrude into the at least one cavity. In other words, the cavity is free of the carrier of the end cap, in particular the cavity is free of the end cap.

This will greatly simplify installation. However, for special applications, parts of the carrier or and/or parts of end cap might engage and/or protrude into the at least one cavity or they might be arranged therein. For example, there might be one or more protrusions for positioning the end cap on the first end of the hollow body.

Especially, the carrier of the end cap forms a closed area. In this case it is sufficient to provide the first expandable material along the outer edges of the carrier in order to seal the at least one cavity entirely.

Further preferred, the carrier has an outer shape similar to the outer contour of the hollow body at the first end. In this case, the first expandable can be arranged along the outer edges of the carrier, especially along a single loop and/or in the form of a single loop to seal the cavities.

In particular, the end cap is configured such that when the first expandable material is in unexpanded state, the at least one cavity is in fluid communication with an area outside the reinforcing member. This is beneficial for example if the structural member and/or the vehicle body are treated with liquids, e.g., protective and/or anticorrosion coatings, during the assembly of the reinforcing member and/or the vehicle body and before expanding the first expandable material. Thereby, liquid coating material can reach the interior parts of the hollow body of the reinforcing member and/or drain from the cavity after treatment.

Especially, the reinforcing member is configured such that upon expansion of the first expandable material, a material connection is formed that joins the end cap with the hollow body. Likewise, preferably, the reinforcing member is configured such that upon expansion of the second expandable material, a material connection is formed that joins the end cap with a part of the vehicle body.

According to as special embodiment, there is no further mechanical connection between the end cap and the vehicle body, especially no form-fit and/or force-fit connection, in particular no screw, rivet and/or snap connection.

Also, in a special embodiment, there is no further mechanical connection between the end cap and the hollow body, especially no form-fit and/or force-fit connection, in particular no screw, rivet and/or snap connection.

In principle, any desired material that can be made to foam in a controlled manner can be used as the first expandable material. This material may or may not have reinforcing properties. In the present case, a first expandable material with reinforcing properties is preferred for forming the material connection between the end cap and the hollow body.

The second expandable material likewise is a material that can be made to foam in a controlled manner. Preferably is configured as expandable material with reinforcing properties. In this case, a highly stable connection between the vehicle body and the end cap can be achieved.

Both, the first and the second expandable material typically are configured in such a way that they can be foamed thermally, by moisture and/or by electromagnetic radiation.

Such expandable materials typically comprise a chemical and/or a physical foaming agent. Chemical foaming agents are organic and/or inorganic compounds which decompose under the influence of temperature, moisture and/or electromagnetic radiation, at least one of the decomposition products being a gas. Compounds which transition into the gaseous state of aggregation when the temperature is increased may for example be used as physical foaming agents. As a result, both chemical and physical foaming agents are capable of creating foam structures in polymers.

The expandable materials are preferably foamed thermally, with chemical foaming agents being used. Examples of suitable chemical foaming agents are azodicarbonamides, sulfohydrazides, hydrogen carbonates or carbonates.

Suitable foaming agents are, for example, also commercially available under the trade name Expancel@ from Akzo Nobel, the Netherlands, or under the trade name Celogen^{®} from Chemtura Corp., USA. The heat required for the foaming can be introduced by external or by internal heat sources, such as an exothermic chemical reaction.

The expandable materials are preferably foamable at a temperature of <200°C, preferably <160°C, in particular of 80°C to 150°C, preferably of 90°C to 140°C. In particular, this is over a period of time of 10-60 min. In this way, said expandable materials can be foamed in already established process steps in vehicle manufacturing.

Examples of suitable expandable materials are single-component epoxy resin systems which do not flow at room temperature and in particular have an enhanced impact strength and contain thixotropic agents such as aerosils or nanoclays. For example, epoxy resin systems of this type include 20 to 50% by weight of a liquid epoxy resin, 0 to 30% by weight of a solid epoxy resin, 5 to 30% by weight of impact modifiers, 1 to 5% by weight of physical or chemical foaming agents, 10 to 40% by weight of fillers, 1 to 10% by weight of thixotropic agents and 2 to 10% by weight of heat-activatable catalysts. Suitable impact modifiers are reactive liquid rubbers based on nitrile rubber or derivatives of polyether polyol polyurethanes, core-shell polymers and similar systems known to a person skilled in the art.

Likewise suitable foamable materials are one-component polyurethane compositions containing foaming agents and based on crystalline polyesters comprising OH groups and mixed with further polyols, preferably polyether polyols, and polyisocyanates with blocked isocyanate groups. The melting point of the crystalline polyester should be >50°C. The isocyanate groups of the polyisocyanate can be blocked, for example by nucleophiles such as caprolactam, phenols or benzoxalones. Also suitable are blocked polyisocyanates such as are used, for example, in powder-coating technology and are commercially available, for example, under the trade names Vestagon^{®} BF 1350 and Vestagon^{®} BF 1540 from Degussa GmbH, Germany. Likewise suitable as isocyanates are so-called encapsulated or surface-deactivated polyisocyanates which are known to a person skilled in the art and are described, for example, in EP 0 204 970.

Also, suitable as expandable materials are two-component epoxy/polyurethane compositions containing foaming agents, such as are described, for example, in WO 2005/080524 A1.

Also, suitable as expandable materials are ethylene-vinyl acetate compositions containing foaming agents.

Likewise suitable expandable materials are sold, for example, under the trade name SikaBaffle^{®} 240, SikaBaffle^{®} 250, SikaBaffle^{®} 255, or SikaReinforcer^{®}-940 by Sika Corp., USA.

In one exemplary embodiment, the expansion rate of the second expandable material, especially of the first expandable material and the second expandable material, is/are less than 500%, or less than 400%, or less than 300%. Expandable materials that are expandable to a lesser degree usually offer the advantage that they do not lose mechanical stability to an excessive degree on expansion.

Especially, the second expandable material, in particular the first expandable material and/or the second expandable material, in expanded state has/have an E-modulus of at least 100 MPa or of at least 150 MPa or of at least 200 MPa. The values specified with respect to the modulus of elasticity relate to the expandable material in the state of use thereof. This means that the values are specified in particular after a possible expansion of the material and after a possible hardening of the material.

Also, the first expandable material can have an expansion rate of more than 500%, preferably of more than 800%, particularly preferably of more than 1500%.

Especially, the first expandable material in expanded state can have an E-modulus of at most 20 MPa or at most 15 MPa or at most 10 MPa.

A rather high expansion rate and a low E-modulus are in particular beneficial if the first expandable materials are not required to have any reinforcing properties and thus an improved sealing function is in the focus.

In a special embodiment, the chemical composition and/or the physical properties of the first expandable material and the second expandable material are different. In particular, an E-modulus of the first expandable material is lower than the E-modulus of the second expandable material. Alternatively, or in addition, the expansion rate of the first expandable material is higher than the expansion rate of the second expandable material. This allows for specifically adapting the expandable materials to the desired functions.

The carrier is made in particular from a non-expandable material. In the context of this invention, the expression "non-expandable" means that the volume of a material changes by not more than or by less than 10% when the process steps provided for the expanding the expandable materials are carried out. This is in particular at a temperature of up to 160°C, in particular of 80°C to 150°C, preferably of 90°C to 140°C. In comparison with the expandable material, the carrier thus expands far less to not at all and remains substantially in its original shape even in the expanded state of the expandable materials.

The carrier may consist of any desired materials. Preferred materials are plastics, in particular polyurethanes, polyamides, polyesters and polyolefins, preferably high-temperature-resistant polymers such as poly(phenylene ethers), polysulfones or polyether sulfones, which may in particular also be foamed; metals, in particular aluminum and steel; or grown organic materials, in particular wood or other (densified) fibrous materials, or glass-type or ceramic materials; especially also foamed materials of this type; or any desired combinations of these materials. Polyamide, in particular polyamide 6, polyamide 6.6, polyamide 11, polyamide 12 or a mixture thereof, is particularly preferably used.

Combinations of the aforementioned materials with fibers, such as for example glass fibers or carbon fibers, are also possible, Glass fiber-reinforced plastics (GFRP) or carbon fiber-reinforced plastics (CFRP) are particularly preferred.

Especially the carrier is made from metals, in particular aluminum and/or steel.

In another preferred embodiment, a second end of the hollow body is closed with a further end cap, whereby, preferably, the further end cap is identical in design to the end cap described above. Thereby, with hollow bodies having exactly two free ends, the completely elongate hollow body can be sealed at both ends.

Thus, in this case, the further end cap comprises a further carrier with a further first area, which is facing the second end of the hollow elongate and whereby the further first area comprises a further first expandable material, which, at least in expanded state, joins the further end cap with the hollow body, especially in a sealing manner; and
the further end cap comprises a further second expandable material located at a further second area of the end cap, whereby the further second expandable material, at least in expanded state, joins the further end cap with a further part of the vehicle body.

The further carrier, further first area, the further second area, the further first expandable material, and the further second expandable material are in particular designed and/or configured in the same way as the corresponding parts of the above first mentioned and first described end cap.

In another preferred embodiment, any further end of the hollow body can be closed with one or more additional end caps, whereby, preferably, the one or more additional end caps are identical in design to the above first mentioned end cap. Thereby, the completely elongate hollow body can be sealed at all ends.

A further aspect of the present invention is directed to a vehicle body comprising a reinforcing member as described above.

Thereby, preferably, the reinforcing member is joined to the vehicle body with the second expandable material in expanded state. Thereby, the hollow body preferably is joined via the end cap(s) to the vehicle body. However, additional connections might be present as well.

In a further preferred embodiment, the reinforcing member is solely joined to the vehicle body via the end cap(s) of the reinforcing member. In this case, the hollow body for example does not comprise any direct connection, especially any direct material connection, with the vehicle body.

Especially, the second area of the end cap is facing the vehicle body, in particular such that the second expandable material in expanded state fills a region between the vehicle body and the second area of the end cap.

A further aspect of the present invention is direct to a method for reinforcing a vehicle body comprising the steps of:
a) Providing a vehicle body and a reinforcing member, the reinforcing member comprising an elongate hollow body having at least one cavity, especially a plurality of cavities, running along a longitudinal axis of the hollow body; an end cap arranged at a first end of the hollow body to close the at least one cavity in a sealing manner and to reinforce the elongate hollow body at the first end; whereby the end cap comprises a carrier with an first area, which is facing the first end of the elongate hollow body and whereby the first area comprises a first expandable material, which, at least in expanded state, joins the end cap with the hollow body, especially in a sealing manner; and the end cap comprises a second expandable material located at a second area of the end cap, whereby the second expandable material, at least in expanded state, is configured to join the end cap with a part of the vehicle body;
b) Expanding the first expandable material such that the first expandable material forms a material connection that joins the end cap with the hollow body;
c) Expanding the second expandable material such that the second expandable material forms a material connection that joins the end cap with a part of the vehicle body.

Thereby, steps b) and c) may take place simultaneously, or step b) can take place before step c), or step b) can take place after step c).

Furthermore, the invention is directed to a use of an end cap as described above for reinforcing, especially for simultaneously reinforcing and sealing, an elongate hollow body having at least one cavity, especially a plurality of cavities, running along a longitudinal axis of the hollow body. Thereby, the elongate hollow body preferably is a part of a reinforcing member for reinforcing a vehicle body.

As still further aspect of the invention is directed to the use of a reinforcing member as described above for reinforcing a vehicle body.

Further advantageous implementations of the invention are evident from the exemplary embodiments.

### Brief description of drawings

The drawings used to explain the exemplary embodiments show:
- Fig. 1: a schematic, exemplary illustration of a body of a motor vehicle;
- Fig. 2: a reinforcing member comprising of a hollow elongate body having two cavities running in parallel along the longitudinal axis of the body and a separate end cap;
- Fig. 3: a top view of the end cap of Fig. 2 from the left side in Fig. 2;
- Fig. 4: the arrangement of Fig. 2 after having moved the end cap over the first end of the hollow body;
- Fig. 5: a cross-section along line A - A of the arrangement shown in Fig. 4;
- Fig. 6: the arrangement of Fig. 5 after expansion of the expandable material whereby expanded material joins the end cap with the hollow body;
- Fig. 7: shows the arrangement of Fig. 6 after it was attached to a part of a vehicle body.

### Exemplary embodiments

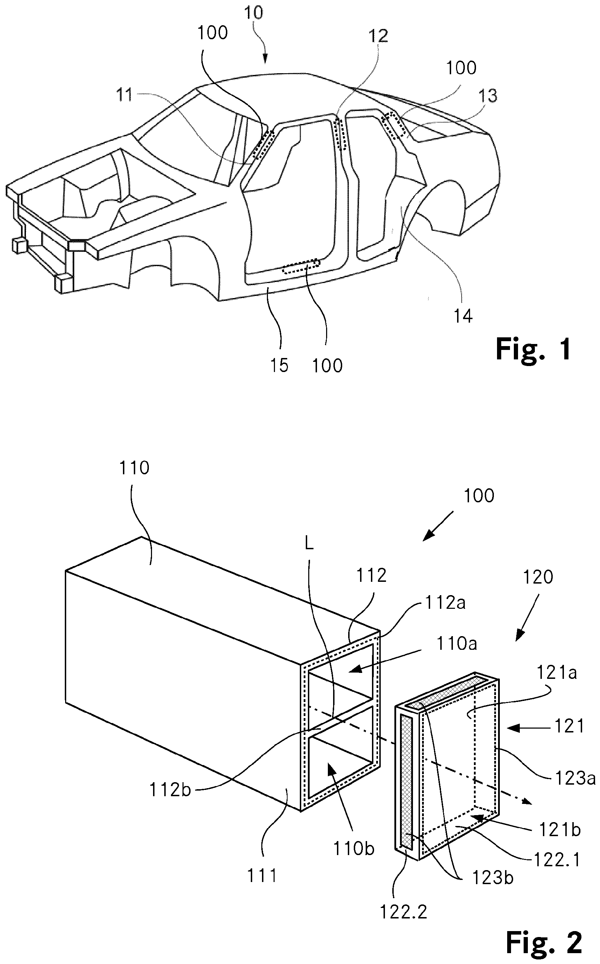

Fig 1. schematically illustrates a body 10 of a motor vehicle. In this context, the body 10 has various structural parts, such as for example the A-pillar 11, the B-pillar 12, the C-pillar 13, the wheel well 14, or the side sill 15. Such structural parts can now be reinforced by a rreinforcing member 100 according to the invention, which are illustrated schematically in Fig. 1 as dashed elements.

Fig. 2 shows a reinforcing member 100 comprising of a cuboid elongate body 110 having two cavities 110a, 110b running in parallel along the longitudinal axis L of the body 110. At the first end 111, the hollow body 110 has a face side 112 with a rectangular frame-shaped section 112a (indicated by a dashed line) defining the contour of the face side 112 and a web section 112b connecting the left and the right side of the frame-shaped section 112a.

At the right side of Fig. 2, there is an end cap 120 comprising a carrier 121 having a flat rectangular section 122.1 and a flange 122.2 protruding in a direction perpendicular to the flat section 122.1 and surrounding the latter. The carrier 121 has an inner shape similar to the outer contour of the hollow body 110 at the first end 111.

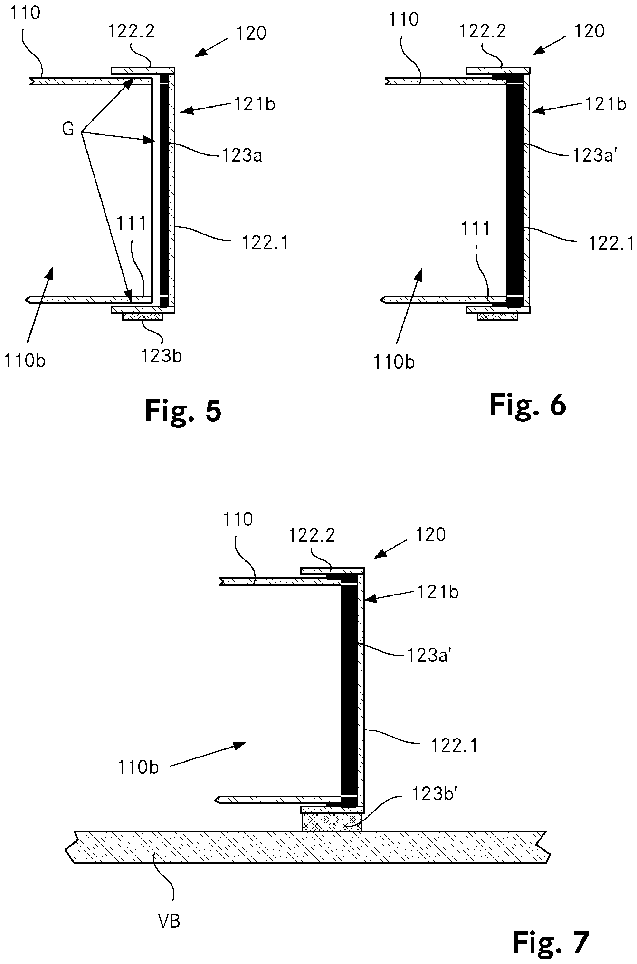

The backside (hidden side in Fig. 2) of the flat section 122.1 of carrier 121 forms a first area 121a of the end cap 120, which is facing the first end 111 of the elongate hollow body 110. The first area 121a comprises a first expandable material 123a in the form of a rectangular loop, which, at least in expanded state, can join the end cap 120 with the hollow body 110 in a sealing manner (cf. Fig. 5 and 6).

The frontside of the flat section 122.1 of carrier 121 together with the outer surface of the flange 122.2 forms a second area 121b of the end cap 120. On the outer surface of the flange, strips of a second expandable material 123b are arranged at the left and the upper side of the flange 122.2.

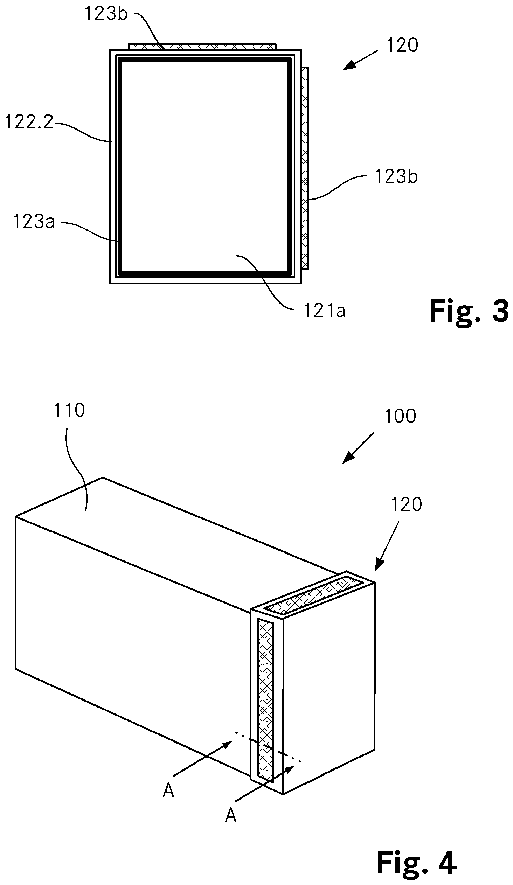

The end cap 120 is configured to be moved over the first end 111 of the hollow body 110 (cf. Fig. 4) to seal and reinforce the first end 111.

Fig. 3 shows a top view of the end cap 120 of Fig. 2 from the left side of Fig. 2 or the first area 121a of the end cap 120, respectively.

Fig. 4 shows the arrangement of Fig. 2 after having moved the end cap 120 over the first end 111 of the hollow body 110.

Fig. 5 show a cross-section along line A - A of the arrangement shown in Fig. 4. Thereby, the flange 122.2 engages with the outer surface of the fist end 111 of the hollow body 110. The engagement results in a form-fit with respect to the directions perpendicular to the longitudinal axis L of the hollow body 110. In Fig. 5, the first expandable material 123a is shown in unexpanded state. Thereby, the first expandable material 123a is located opposite the rectangular frame-shaped section 112a of the face side 112 (cf. Fig. 2).

In the situation shown in Fig. 5, since the first expandable material 123a is in unexpanded state, there are small gaps G between the end cap 120 and the hollow body 110 so that the cavities 110a, 110b are in fluid communication with an area outside the reinforcing member 100.

Fig. 6 shown the arrangement of Fig. 5 after expansion of the expandable material. The expanded first material 123a' joins the end cap 120 with the hollow body 110. Specifically, the expanded first material 123a' is in direct contact with the rectangular frame-shaped section 112a of the face side 112. Consequently, the gaps G shown on Fig. 5 are sealed with the expanded first material 123a' such that the cavities 110a, 110b no longer are in fluid communication with an area outside the reinforcing member 100.

Because the web section 112b of the face side 112 is not contacted with expanded material 123a', the cavities 110a, 110b remain in fluid communication with each other (not shown in Fig. 6) even though they are sealed with respect to the area outside the reinforcing member 100.

Fig. 7 shows the arrangement of Fig. 6 after it was attached to a part of a vehicle body VC (e.g., to a side sill 15 as shown in Fig. 1) for reinforcing the latter. Specifically, the end cap 120 is joined to the vehicle body VC via the expanded second expandable material 123b'.

As evident form the figures, no sealing or reinforcing elements are placed inside the elongate hollow body or protrude into its cavities 110a, 110b.

For example, the first expandable material 123a and the second expandable material 123b both have reinforcing properties. The first expandable material and the second the second expandable material in expanded state e.g., have an E-modulus of at least 100 MPa or of at least 150 MPa or of at least 200 MPa.

The carrier 121 for example is made from a metal such as e.g., aluminum.

At the other end of the hollow body 110, a further end cap, which is similar or identical in design to the first end cap, can be arranged and joined to another part of the vehicle body (not shown).

It will be appreciated by those skilled in the art that the present invention can be implemented in other specific forms without departing from the spirit or essential characteristics thereof. The presently disclosed implementations and embodiments are therefore considered in all respects to be illustrative and not restricted.

For example, alternatively or in addition, the second expandable material 123b can be located on the frontside of the flat section 122.1 of carrier 121 in order to join the end cap with another part of a vehicle body in a direction of the longitudinal axis L.

Likewise, the first expandable material 123a alternatively or in addition may be arranged on the inner surfaces of the flange 122.2.

Also, the flange 122.2 can be omitted or it can be replaced by one or more individual protrusions for positioning the end cap on the first end of the hollow body.

Furthermore, the hollow body 110 can have a different shape, e.g., with a first end having a round or trapezoidal contour and/or the hollow body 110 may comprise more or less than the two cavities 110a, 110b.

## Claims

1. Reinforcing member (100) for reinforcing a vehicle body (VC), the reinforcing member comprising:
an elongate hollow body (110) having at least one cavity (110a, 110b), especially a plurality of cavities, running along a longitudinal axis (L) of the hollow body (110);
an end cap (120) arranged at a first end (111) of the hollow body (110) to close the at least one cavity (110a, 110b) in a sealing manner and to reinforce the elongate hollow body (110) at the first end (111);
whereby the end cap (120) comprises a carrier (121) with a first area (121a), which is facing the first end (111) of the elongate hollow body (110) and whereby the first area (121a) comprises a first expandable material (123a), which, at least in expanded state, joins the end cap (120) with the hollow body (110), especially in a sealing manner; and
the end cap (120) comprises a second expandable material (123b) located at a second area (121b) of the end cap (120), whereby the second expandable material (123b), at least in expanded state, is configured to join the end cap (120) with a part of the vehicle body (VC).

2. Reinforcing member according to claim 1, whereby the end cap (120) is configured for engaging with an outer surface of the first end (111) of the elongate body (110).

3. Reinforcing member according to any of preceding claims, wherein the end cap (120) comprises at least one flange (122.2) projecting from the carrier (121), whereby the flange (122.2) is configured to surround the outer surface of the hollow body (110) in the region of the first end (111) at least partly, especially completely, in a form-fit manner.

4. Reinforcing member according to any of preceding claims, wherein the first expandable material (123a) is arranged such that in expanded state it seals an outer contour of the at least one cavity (110a, 110b) at the first end (111), especially an outer contour of all cavities at the first end.

5. Reinforcing member according to any of preceding claims, wherein the first expandable material (123a) is arranged such that in expanded state, at the first end (111), neighboring cavities (110a, 110b) are in fluid communication with each other.

6. Reinforcing member according to any of preceding claims, wherein the first expandable material (123a) is arranged on the carrier (121) along a single loop and/or in the form of a single loop.

7. Reinforcing member according to any of preceding claims, wherein the carrier (121) of the end cap (120), especially the whole end cap, does not engage with an inner surface of the at least one cavity (110a, 110b).

8. Reinforcing member according to any of preceding claims, wherein the carrier (121) of the end cap (120), especially the whole end cap, does not protrude into the at least one cavity (110a, 110b).

9. Reinforcing member according to any of preceding claims, wherein the carrier (121) has an outer shape similar to the outer contour of the hollow body (110) at the first end (111).

10. Reinforcing member according to any of preceding claims, whereby the end cap (110) is configured such that when the first expandable material (123a) is in unexpanded state, the at least one cavity (110a, 110b) is in fluid communication with an area outside the reinforcing member (100).

11. Reinforcing member according to any of preceding claims, wherein the second expandable material (123b) in expanded state have an E-modulus of at least 100 MPa or of at least 150 MPa or of at least 200 MPa.

12. Vehicle body (VC) comprising a reinforcing member (100) according to any of preceding claims.

13. Vehicle body according to claim 12, whereby the reinforcing member (100) is joined to the vehicle body (VC) with the second expandable material (123b).

14. Method for reinforcing a vehicle body comprising the steps of:
a) Providing a vehicle body (VC) and a reinforcing member (100) according to any of preceding claims;
b) Expanding the first expandable material (123a) such that the first expandable material (123a) forms a material connection that joins the end cap (120) with the hollow body (110);
c) Expanding the second expandable material (123b) such that the second expandable material (123b) forms a material connection that joins the end cap (120) with a part of the vehicle body (VC).

15. Use of a reinforcing member (100) according to any of preceding claims for reinforcing a vehicle body (VC).
